# EUROPEAN PATENT SPECIFICATION

(11) **EP 2 358 561 B1**
(45) Date of publication and mention of the grant of the patent: **14.12.2016**
(21) Application number: 09760002.7
(22) Date of filing: 12.11.2009
(51) Int. Cl.: B60N 2/22, B60N 2/427, B60N 2/68

(54) **COMPOSITE SEAT STRUCTURE**
VERBUNDSITZSTRUKTUR
STRUCTURE DE SIÈGE COMPOSITE

(30) Priority: 12.11.2008 EP 08168921
(43) Date of publication of application: 24.08.2011
(73) Proprietor: Inxide AB, 46153 Trollhättan (SE)
(72) Inventor: HANCOCK, Steven, CH-1296 Coppet (CH); JONSSON, Tony, CH-1630 Bulle (CH)
(74) Representative: Ganguillet, Cyril
(86) International application number: PCT/IB2009/055039
(87) International publication number: WO 2010/055482

(56) References cited:
- WO-A1-98/15422
- DE-A1-102007 016 690
- JP-A- 56 086 830
- JP-A- 2001 270 358
- JP-U- 55 114 261

## Description

### Technical Field

The present invention relates to a reinforced polymer seat structure and in particular a vehicle seat frame structure having a low weight, a low cost and a high safety.

### Prior Art and the Problem Underlying the Invention

Reduction of vehicle weight is an important method of reducing fuel consumption and hence the CO₂ emissions from passenger vehicles. Since there are usually multiple seats in a passenger vehicle they are a candidate for effective weight reduction. However, seats are often critical safety items within a vehicle and hence have to withstand not only the loading occurring during use of the vehicle but also the substantially more severe loading applied during a crash event. One of the challenges is to define a concept that gives a predictable and stable response also for the cases when the crash violence exceeds the standard load cases. In an automotive vehicle, for example, the seat frame is a vital part of the passive safety system contributing to how the passenger is supported during the crash event. It shall also withstand other load cases which might occur at crash, i.e. luggage situated rear of the seat at frontal crash, sliding and hitting the back of the seat with high violence. Hence, robustness is of key importance as it is imperative that interior components protect the passengers and do not show any sharp edges or become harmful in any way to the occupants of a vehicle even during a crash event. This also implies that the structure should have a load carrying capacity for large deformation. Typically light weight structures formed from steel sheet materials tend to buckle under large deformation, resulting in sudden drop in load carrying capacity. Furthermore, it is essential to get a simple and rapid analysis of the structure after a crash event, to determine whether it is necessary to replace the seat structure.

The vast majority of seat structures for vehicles are produced either from extruded steel sections which are bent and welded together or from stamped steel sheets which are spot welded together. The main driver for the use of metals is their relatively low raw material cost, their predictable performance and the extensive experience available on how to best use these materials to manufacturing parts.

US 2008/0038569 discloses a composite component as a seat back for a vehicle. The seat back comprises a support portion and a reinforcing composite layer. According to this teaching, the reinforcement layer is applied to the part of the back seat that has to resist to forces acting horizontally in the front to rear direction of the seat back. In order to achieve sufficient stability to withstand such forces, the reinforcing layer is U-shaped and covers a large surface of the support portion. Accordingly, the utilisation of the reinforcement material is not optimised and a lot of such material has to be used.

JP 55 114261 U, DE 10 2007 016690 A1, WO 98/15422 A1, JP 56 086830 A and JP 2001 270358 A reveal alternative seat frame structures

In view of the above, it is an objective of the present invention to provide a light seat frame structure for a vehicle seat that is sufficiently resistive and stable with respect to severe loading applied during a crash event.

In particular, it is an objective to provide a seat frame on the basis of polymers that is resistive and stable with respect to horizontal loads from impacts onto the back of the seat.

It is a further objective to optimise the use of reinforcing materials in a seat frame structure in order to minimize weight and cost of the seat frame structure, while still providing a structure fulfilling the requirements on robustness.

### Summary of Invention

The inventors of the present invention provide a reinforced polymer seat structure or part thereof which is optimised both in geometry and in the configuration of materials to be low cost, light weight and have enhanced safety performance.

Accordingly, in an aspect, the present invention provides a seat frame structure according to independent claim 1.

In the drawings,
**Figure 1** shows an embodiment of a seal frame structure which is different from the present invention.
**Figure 2** is a cross-section of an embodiment of a longitudinal element of the structure of Figure 1.
**Figure 3** shows another embodiment of a seat frame structure which is different from the present invention.
**Figure 4** shows an embodiment of a back frame structure which is different from the present invention provided as a single piece polymer material with local reinforcements.
**Figure 5** shows a detail view of the back frame structure of Figure 3.
**Figures 6-8** show a top end of a back frame structure, comprising a connecting structure comprising two telescopically connected polymer profiles.
**Figure 9** shows the two telescopically polymer profiles of the back frame structure of Figure 8 separated from each other.
**Figure 10** shows the bottom end of an embodiment of a back frame structure which is different from the present invention.
**Figure 11** shows in greater detail a bottom end of a lateral longitudinal side frame element of the back frame structure which is different from the present invention.
**Figure 12** shows in greater detail a hinge mechanism of the embodiment of Figure 3.
**Figure 13** shows an embodiment of the present invention, in which a longitudinal frame element has at least in part an U-shaped cross-section, said U-shaped cross-section merging to an I-shaped cross-section towards a transversal connecting element in the area where a hinge mechanism is attached.
**Figure 14** shows a view in cross-section through line I-I of the longitudinal frame element shown in Figure 13, showing the transition between a U-shaped and an I-shaped cross section.
**Figure 15a** shows three typical sections that can be used to form the frame elements of the seat structure.
**Figure 15b** shows four typical reinforced sections that can be used to form the frame elements of the seat structure.
**Figure 16** shows a further embodiment of the seat frame structure of the present invention, comprising a back frame structure and of a seat chassis frame structure connected by a hinge mechanism.
**Figure 17** shows a detail view of the hinge mechanism of Figure 16.
**Figure 18** shows the two telescopically polymer profiles of the seat chassis frame structure of Figure 16 separated from each other.
**Figure 19** shows a separated view of the back frame structure of Figure 16.
**Figure 20** shows a lateral view of the back frame structure of Figure 19.
**Figures 21a, 21b and 21c** show sectional, perspective views of the back frame structure of Figure 20 respectively along the direction A-A, B-B and C-C.
**Figure 22** shows a sectional, perspective view of the seat frame structure of Figure 16 along a plane parallel to the longitudinal direction of the vehicle.
**Figure 23a** shows in greater detail the position of the bottom end of a lateral longitudinal side frame element of the back frame structure of Figure 16 with regard to the seat chassis frame structure.
**Figure 23b** shows a schematic representation of Figure 23a.
**Figure 24** shows a sectional, perspective view of the bottom end of a lateral longitudinal side frame element of the back frame structure of Figure 16 in a specific embodiment of the invention.
**Figure 27** shows a schematic view of a vehicule in which the longitudinal, lateral and vertical directions are shown.

### Detailed Description of the Preferred Embodiments

The device of the present invention is now illustrated by way of example with reference to the appended drawing figures.

For the purpose of the present specification, indications of place and direction, such as bottom and top, lateral and central, left and right, proximal and distal, front and rear and so forth refer to positions and directions as perceived by a user sitting in a chair comprising the frame structures as disclosed herein.

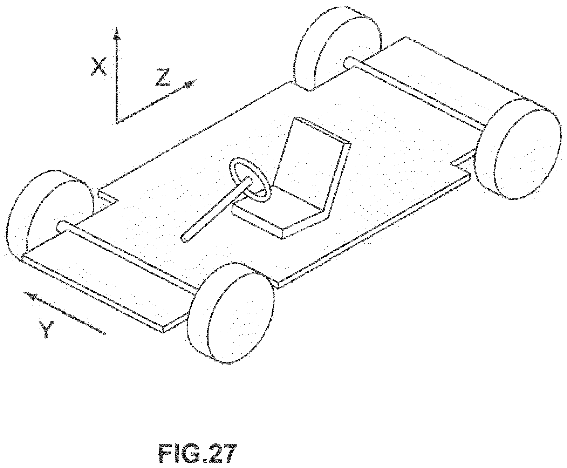

In the following description, it is also referred to the vertical, transverse or lateral and longitudinal direction of a vehicle. These directions are respectively shown in Figure 27 by the arrows X, Y and Z.

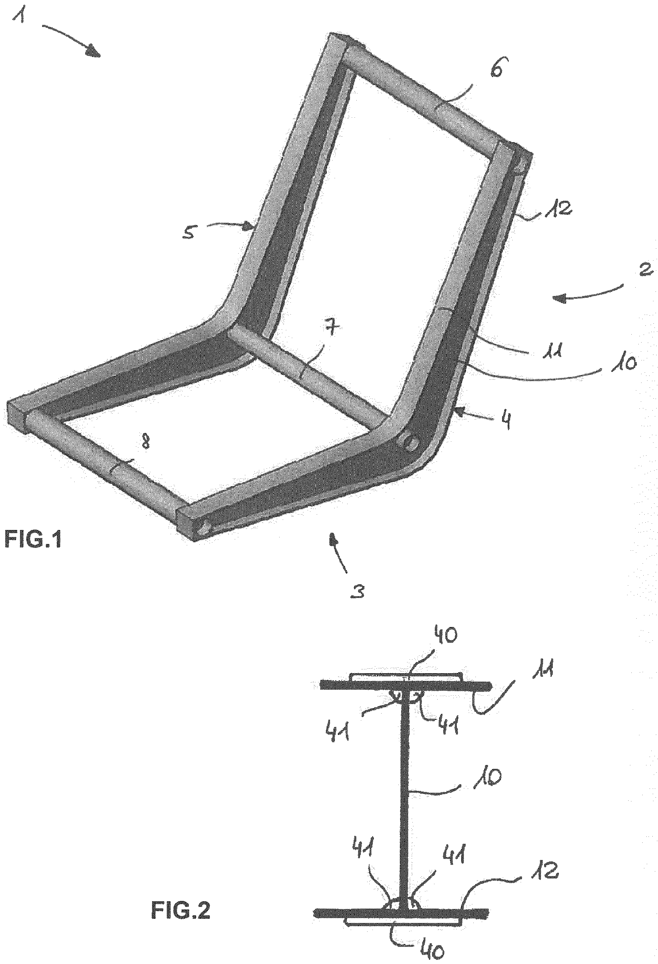

The embodiment of a seat frame structure 1 for a seat comprising a back portion 2 and a seat portion 3 shown in Figure 1 comprises two lateral, left and right longitudinal frame elements 4, 5. The longitudinal frame elements are arranged substantially in parallel and linked to each other by three connecting elements 6-8.

In general, the longitudinal frame elements are the primary load bearing structures. The connecting elements are arranged substantially horizontally and extend from the left to the right in a direction which is substantially perpendicular to the rear-to-front direction. One function of the connecting elements is to distribute loads between the side elements.

In the embodiment shown in Figure 1, the lateral longitudinal frame elements 4, 5 and the connecting elements 6, 7, 8 are originally separate structures which are assembled. In an embodiment of the invention, and in particular in the embodiment of a back frame structure for a seat, it is possible that the longitudinal frame elements and at least one connecting element are formed from a single piece, or that the longitudinal frame element and part of a connecting element are made of a single piece.

The longitudinal frame elements 4, 5 have a geometrical configuration that optimises load bearing with respect to loads impacting in front to rear direction, or vice-versa, upon the seat frame. The geometrical configuration is revealed when considering a cross-section through one of the longitudinal frame elements 4, 5 at a position preferably lying in the lower portion between the rear lower connecting element 7 and the top connecting element 6 of the back frame structure. The cross section preferably is symmetric and preferably has an I-like configuration. More generally, a longitudinal frame element 4, 5, comprises a central flat web 10. The central flat web is preferably oriented in a way that its two opposing sides face towards lateral, that is, towards the left and right sides, respectively. In this way, the I-like configuration of the longitudinal frames provide most resistance to impacts from behind or from the front. Each longitudinal frame element thus comprises proximal and distal flat flanges 11, 12 (flanges fore and aft), which, in the embodiments shown, are arranged along the border of the central flat web 10. The flat surfaces of the proximal and distal flanges 11, 12, in the case of the back frame structure, face towards the front and the back, and in case of the seat chassis frame structure towards the top and the bottom. In other words, the proximal and distal flanges 11 and 12 are attached substantially perpendicularly to the central flat web 10. They preferably have about the same largeness (left-to-right extension) at a given position along their longitudinal extension. Since the entire longitudinal frame elements 4, 5 preferably have a symmetrical cross-section, this means that the proximal and distal flanges 11, 12 are connected along their longitudinal axis of symmetry to end portions of the central flat web 10. The connecting elements 6-8, in the embodiment shown in Figure 1, are not originating from a single piece with the longitudinal frame elements 4, 5, but are preferably obtained by a separate injection moulding or compression moulding step and are attached in a subsequent step to the longitudinal frame elements 4, 5. It can be seen that the connecting elements 6-8 are attached on or within the central web 10, which optimises the load redistributing function of the connection structures 6-8.

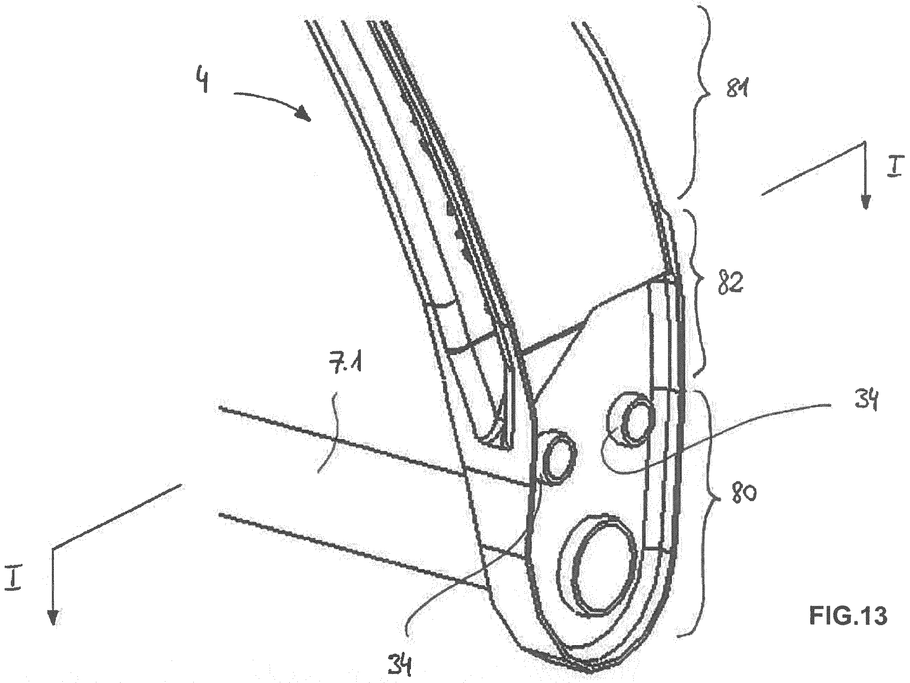

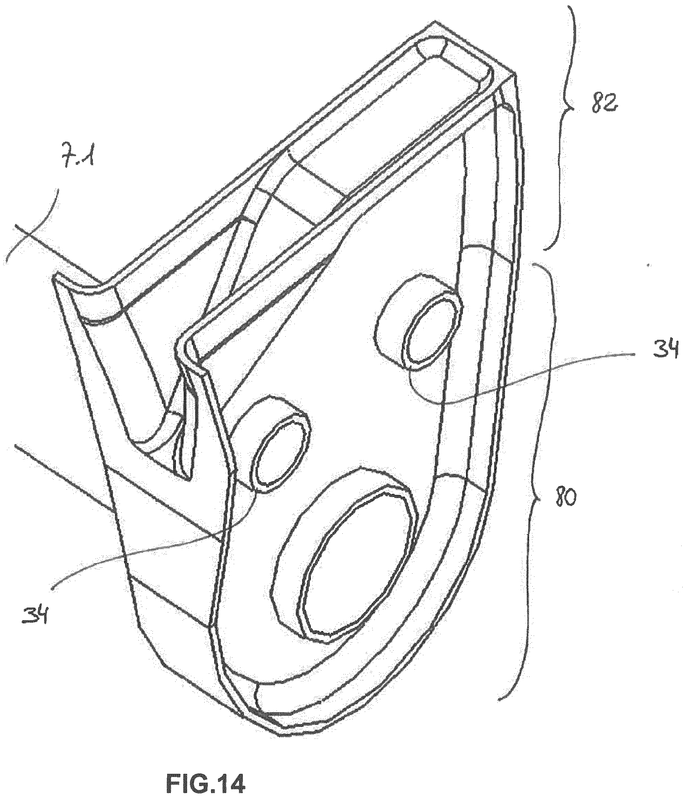

**Figure 2** shows a cross section through an exemplary longitudinal frame element. The perpendicularly arranged central and proximal distal flanges 10-12 can be seen. Furthermore, reinforcing elements 40 and 41 are applied locally in order to improve the frame's robustness. The I-like cross-section obtained by the central web 10 and the proximal and distal flanges 11, 12 can be seen in Figure 1. Preferably, a substantial portion along the longitudinal frame elements has an I-shaped cross-section. According to different embodiments, at least half the length, at least 80% or 100% of the length of a longitudinal frame element is characterised by an I-shaped cross-section as described above. According to a variant represented in Figures 13 and 14 further discussed below, the end portions of the longitudinal frame elements have an I-shaped cross-sections, whereas other portions may or may not have and I-shaped cross-section.

The longitudinal frame elements are, for example, frame elements 4 and 5 in Figure 1, but also corresponding longitudinal frame elements shown in subsequent figures, including those indicated with reference numbers 26, 27, 54, 55, for example.

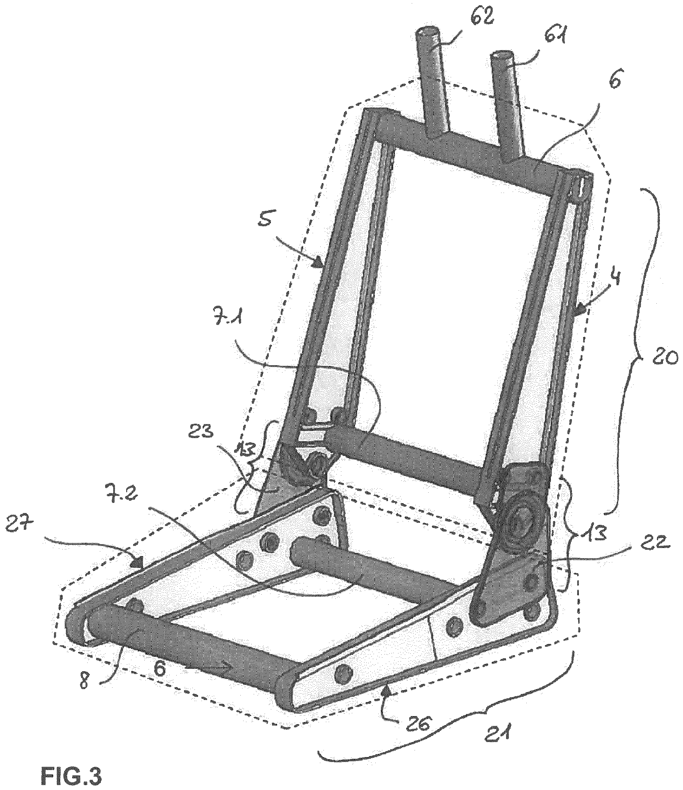

**Figure 3** shows an embodiment of the seat with a reclinable seat back. Accordingly, a back frame structure 20 is pivotally connected via a hinge mechanism 13 to a seat chassis structure 21. Each of the back frame structure 20 and the seat chassis structure 21 has two lateral longitudinal frame elements 4, 5 and 26, 27, respectively, which are connected by two connecting elements 6, 7.1 and 7.2, 8, respectively. It is noted that the longitudinal frame elements 4, 5 and 26, 27, respectively, have an overall shape reminding of a triangle. They are larger towards the lower, rear part of the seat and become thinner towards the front or the top of the seat frame structure. This is reflected by the broadness of the central flat structure indicated with reference numeral 10 in Figure 1, which is at a maximum toward said the lower, rear end of the seat. At this position, the seat frame requires increased robustness. Towards the top and respectively front ends of the lateral longitudinal frame elements, 4, 5 and 26, 27, respectively, less stability is required and the overall structure can be thinner. The same applies to embodiments shown in other figures.

In Figure 3, at the rear part of the seat chassis structure 21 corresponding with the bottom of the back frame structure 20, there is a hinge mechanism 13, which pivotally connects both parts of the seat frame 1 together. The hinge mechanism comprises, on each side, a support plate 22, rigidly attached, for example by way of screws or nuts, to the seat chassis 21, and more particular to the central flat structure of the longitudinal frame element 26, and a pivoting plate 24, which is rigidly attached, for example by way of screws or nuts, to the back frame structure 20. The axis of pivoting on one side is supported and reinforced by said support plate 22, said pivoting plate 24 and the longitudinal frame element 4 or 5. The plates 22 and 24 thus function as reinforcement structures for enabling pivoting of the back frame structure. The hinge mechanism will be described in further detail below.

In Figure 3, the top connecting element 6, provided at the upper end of the back frame structure 20 carries headrest carrying elements 61 and 62.

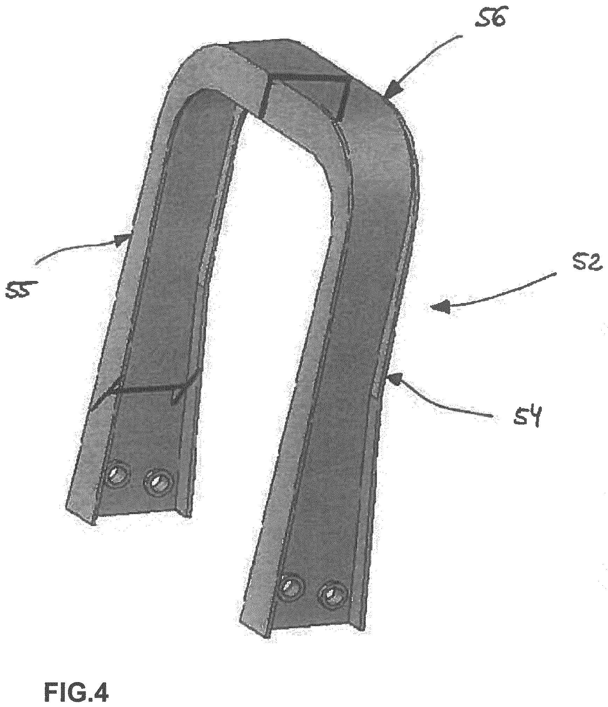

**Figure 4** shows a further embodiment of a back frame structure 52, which is prepared as a single piece. In particular, the back frame structure 52 comprises lateral longitudinal elements 54 and 55 extending in parallel and having an I-shaped cross section, as indicated, wherein said lateral longitudinal elements at their top ends, converge and form a connecting structure 56. The connecting structure 56 has an U-shaped cross section, as indicated in Figure 4. Accordingly, at the top end of each left and right longitudinal frame element 54, 55, the geometrical configuration passes gradually from said I-shaped to said U-shaped cross-section. At the bottom of the back frame structure 52, there are provided housings on each lateral longitudinal frame element 54, 55, or similar structures suitable for attaching a hinge mechanism, similar to the hinge mechanism 13 described above, for example.

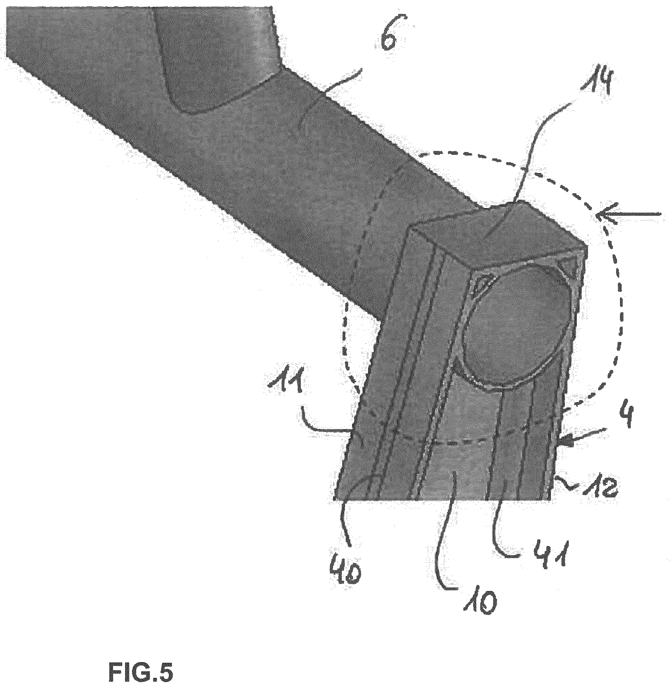

**Figure 5** shows in greater detail the upper end of the left longitudinal frame element 4 of Figure 3, and in particular the connection between the top connecting structure 6 to the longitudinal frame element 4. It can be seen that the connection structure 6 is guided across the central flat structure 10 and stabilised further by the proximal and distal flanges 11 and 12 and by a top flat part 14, which surround the tubular connection structure 6. Reinforcement elements 40 and 41 are provided at specific locations for increasing the robustness of the frame structure made principally from polymers.

In particular, the elements 4, 6, 10-12 and 14 are preferably made from polymer as defined herein, for example fibre reinforced polymer. The reinforcement elements may also be made of fibre reinforced polymer, for example, but they may also be made of other materials providing robustness. Since the reinforcing elements only concern a comparatively small proportion or volume of the overall frame structure, they may also be made of materials that are heavier than polymers, without substantially increasing the weight of the entire seat frame structure.

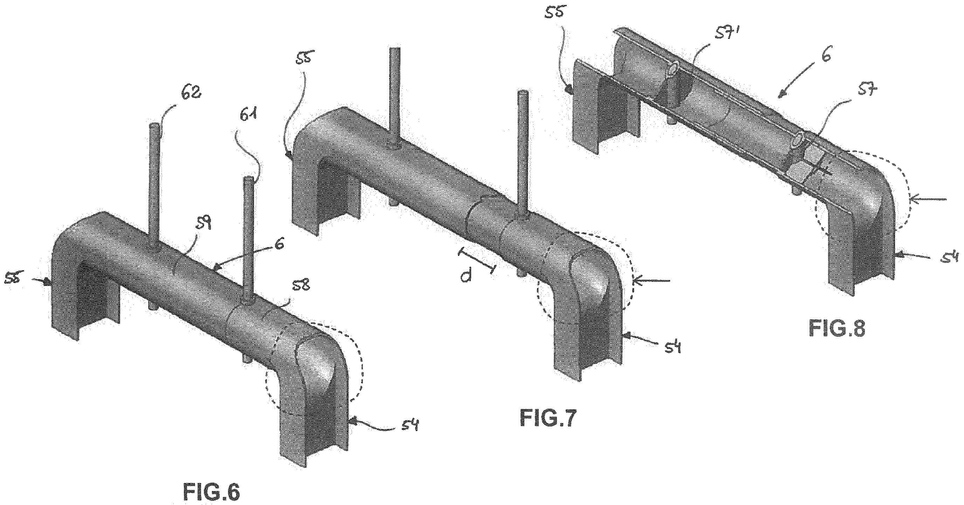

**Figures 6-8** show an embodiment of a geometrical configuration of the top portion of a seat frame structure, in particular a top portion of the back frame structure. According to this embodiment the left and right lateral frame structures 54 and 55 are bent inwardly to assume a horizontal position and form the connecting structure 6. Contrary to the embodiment shown in Figure 4, the entire back frame structure is not provided in a single injection or compression moulded piece. In the embodiment of Figures 6-8, each of the two longitudinal frame element 54 and 55 and part of the connection structure 6 form a single piece. The connection structure 6 comprises thus two main parts, 58 and 59, which are both extensions of the respective longitudinal frame elements 54 and 55. The main parts 58 and 59 are provided as profiles that can engage and be guided one with respect to the other. In particular, in the embodiment shown, the main parts 58 and 59 of the connecting structure are provided as tubes one of which is telescopically guided inside the other. Of course, other axial guiding mechanisms, such as a dovetail guide and so forth maybe used. This arrangement allows the distance between the left and right longitudinal frame elements to be adjusted. This is particularly advantageous, because it allows to use the same structural elements for frames of seats with different widths. In Figure 7, distance between the longitudinal frame elements 54 and 55 is extended by the distance d, if compared to the situation in Figure 6. In Figure 8, a section is cut along the connecting element 6, showing the inside configuration of the connecting structure, which also reveals in greater detail the housings 57 and 57' for harbouring the headrest carrying elements (or headrest frame structure) 61, 62.

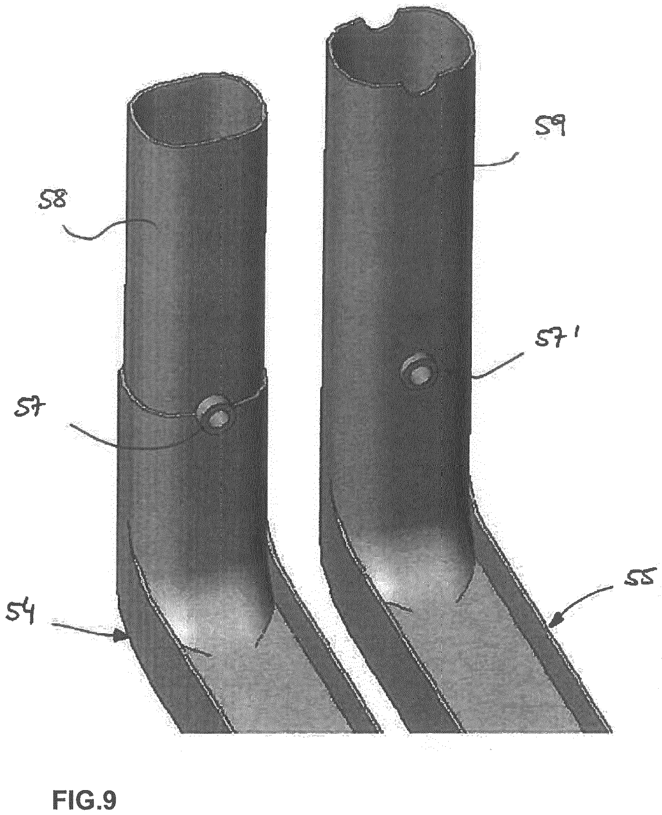

**Figure 9** shows the two separate pieces that form the left and right lateral longitudinal frame elements 54 and 55, and which are provided in one piece together with parts 58 and 59, respectively, of the top connecting structure.

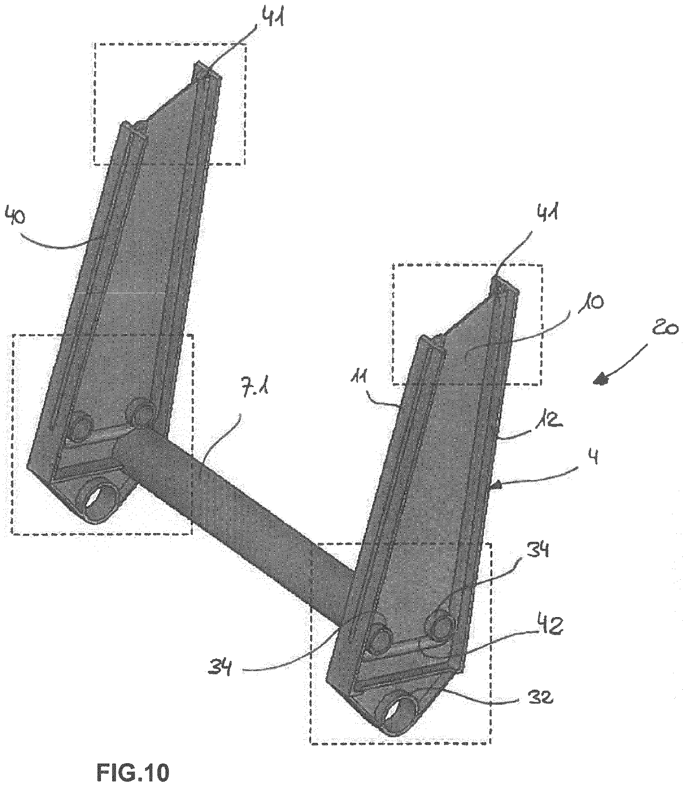

**Figure 10** shows an embodiment of a lower end of the back frame structure 20 of Figure 3, detached from other frame elements, in particular from the hinge element 13 and the seat chassis structure 21. Reinforcements 41, guided in the perpendicular angle between flat surfaces 10-12 can be seen (at the connection between a flange and the central flat structure), and reinforcements 40 applied on the free (proximal) side of flat surface 11. A similar reinforcement 40 is applied on the free distal side of the distal flat surface 12, but this cannot be seen in the view of Figure 10. Figure 10 shows reinforcements having the shape of hollow cylinders 34 and 32, which surround openings in the lateral side frame elements for attaching the hinge mechanism 13 and/or harbouring the pivoting axle for reclining the back frame structure.

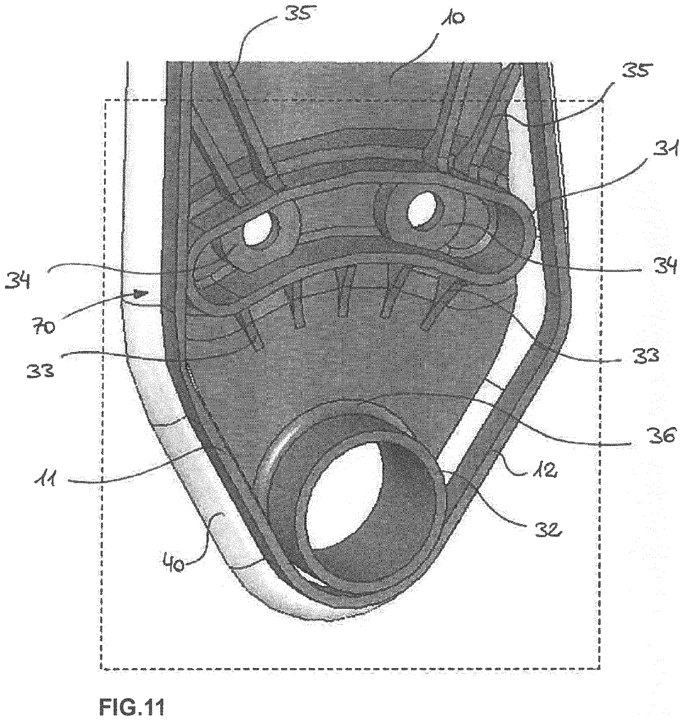

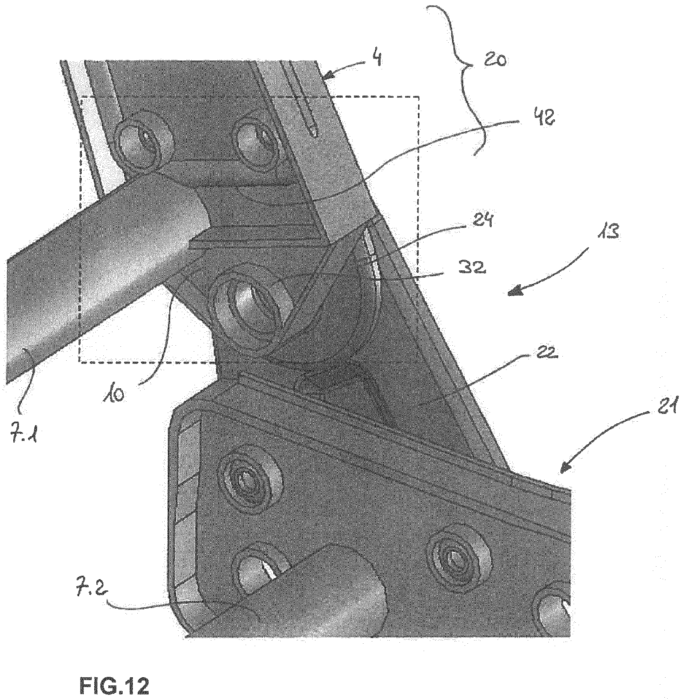

**Figure 11** is a detailed view showing an embodiment of the lower end of a lateral longitudinal frame structure. This view shows in particular the various reinforcement elements used to locally reinforce the overall frame structure in order to increase robustness of the frame structure. Reinforcement structures in the form of hollow cylinders 32, 34 reinforce the housing for the pivoting axle and of the fixing housings for attaching the hinge mechanism 13, respectively. The hollow cylinder 32 providing the housing of the pivoting axle is further stabilised by an annular structure 36. The reinforcement elements 34 for attaching the hinge carrying plate 24 (shown in Figs. 3 and 12) are surrounded by various elements 31, 33, 35, which form an overload indicator 70, besides the function of these elements as reinforcement structures.

The indication function is provided by a plurality of small supporting indicator pieces 33 and 35 and by reinforcing elements integrated inside the structure in the region at the lower, rear end of the lateral longitudinal elements. In the event that a shock event leads to a displacement of a support ring 34 at which the hinge mechanism is attached, this can be recognised by comparison of the position with respect to the indicator pieces. Similarly, an overload frame is provided by a reinforcement structure 31 surrounding the support rings 34 but leaving some space for displacement. As long as the support rings 34 stay inside the area covered by the surrounding reinforcement structure 31, the overall seat frame structure is still functional and can be used further. However, if, following an impact or another severe loading, the surrounding reinforcement structure 31 is broken or opened at some position, this indicates that the frame structure is not functional for absorbing any further load or impact any more and the seat frame structure has to be replaced.

**Figure 12** shows in greater detail the hinge mechanism 13 pivotally connecting a back frame structure and a seat chassis structure 21 on the left side of the seat frame structure in an inside-out view. A support plate 22 is rigidly attached to the rear end of the seat chassis structure 21. The lower end of the longitudinal frame element 4 can be seen, and the lower connecting element 7.1, which connects this longitudinal frame element to the right longitudinal frame element (not shown). A pivoting plate 24 is rigidly attached to the longitudinal frame element 4, and reinforcements are provided to support housings of screws or nuts of attachment. The pivoting axle extends through support plate 22, pivoting plate 24 and the central flat structure of the longitudinal frame element 4. The housing of the pivoting axle is reinforced by a hollow cylindrical border structure 32. Similar to Figure 11, the latter showing the lower end of the longitudinal frame element 4 from the other side (outside) of the seat frame structure, the view of Figure 12 shows many reinforcements, situated to absorb and/or redistribute impact loads, which are particularly high in this area of the seat frame. In case of overload, the selected composite materially and/or locally applied reinforcements avoid braking of the elements. In case of overload, deformation takes place instead of braking.

**Figure 13** shows an embodiment of a lateral frame element according to the present invention comprising a lower portion 80 and an upper portion 81. The lower portion 80 corresponds to the portion where a hinge mechanism 13 is mounted (not shown). In Figure 13, a lower transversal connecting element 7.1 is also provided in this portion. The upper portion 81 forms the main part of the longitudinal extension of the lateral longitudinal frame element and reaches to an upper transversal connecting element 6, as shown in Figure 3, for example. The particularity of the embodiment of Figure 13 is that the lower and upper portions 80 and 81, respectively, of the longitudinal frame element have different cross-sections. More particularly, the lower portion 80 has an I-shaped cross-section as described above, provided with local reinforcements as described above with respect to Figure 11, for example reinforcements 34, in order to reinforce the seat frame structure in this area where loads are particularly high in case of an impact. The upper portion of the longitudinal frame element has an U-shaped cross-section, wherein the U is oriented so that the lateral walls are oriented towards the front or towards behind. This could also be described as a C-shaped cross-section, or, in the embodiment shown in Figure 13, as an inversed C-shaped cross-section ("⊃"). Between the U-shaped cross-section and the I-shaped cross-section there is a transitional portion 82, in which the U-shaped cross-section merges to the I-shaped cross-section.

According to an embodiment, the transitional portion 82 of the longitudinal frame element has a combined U and I-shaped cross section, similar to the symbol " 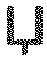 ", reminding of a wine glass. Again, the orientation of the cross-section according to this embodiment is such that the axis of symmetry of the longitudinal frame element is the front-to rear axis of the chair. In other words, the flat surfaces face the left and right sides, and said surfaces can be seen as planes that are situated perpendicularly to the left-to right axis of the chair.

This configuration confers to the longitudinal frame element a good resistance to high loads due to the symmetry of the U and I-shaped cross section in the longitudinal direction of the vehicle. Furthermore, it is advantageous that a major part of the section of the longitudinal frame element has a U shape because a U-shaped structure is more resistant to buckling than a I-shaped structure. However, it is also advantageous to use an I-shaped cross section at the bottom end of the longitudinal frame element of the back frame structure and/or at the rear end of the longitudinal frame element of the seat chassis structure so as to facilitate the connection of the hinge mechanism to said longitudinal frame elements. Indeed, it is easier to connect a bolt to the single plate joining the two flanges of the I-shaped section than to the two arms of the U-shaped cross section.

**Figure 14** is a view in cross-section through the longitudinal frame element of Figure 13 within the transitional portion 82, showing at the same time the said U-shaped cross-section (towards the front) and said I-shaped cross section (towards the back).

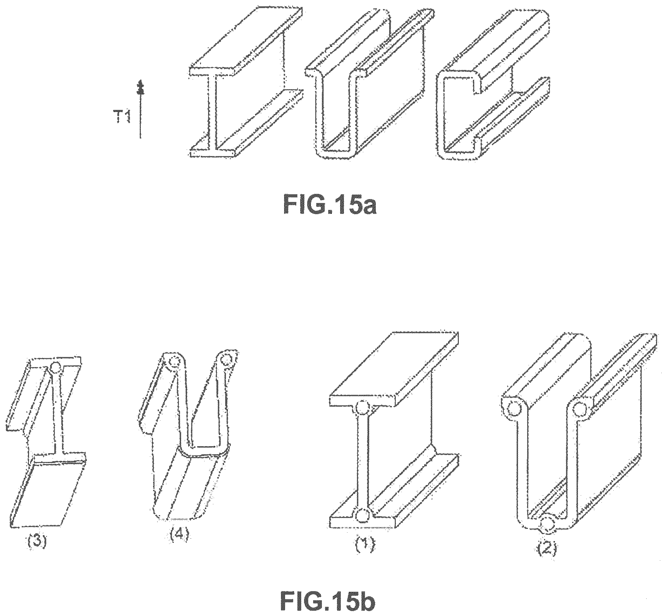

**Figure 15a** shows three typical sections in relation to the critical load due to longitudinal forces on the seat back. Due to their symmetry relative to the main load T1, the I and U-shaped sections are preferred sections.

**Figure 15b** shows four typical reinforced sections that can be advantageously used for manufacturing the frame elements of the seat structure. Different types of reinforcements may be used. For instance, in Figure 15b(1), reinforcements consist in a tow or cable of continuous fibers located at the intersection between the flanges of the I-shaped section and a central web connecting said flanges. In Figure 15b(2), they consist in a tow of continuous fibers located at each end of the arms of the U-shaped section and in the middle of a central web connecting said arms. In Figure 15b(3), the I-shaped section is provided with a tow of continuous reinforcing fibers at the intersection between the upper flange of the I-shaped section and a central web connecting the upper and lower flanges and with a flat profile of an unidirectional fibers material covering the rectangular external side of the lower flange. In Figure 15b(4), the U-shaped section is provided with a tow of continuous reinforcing fibers located at each end of the arms of the U-shaped section and with a curved profile of an unidirectional fibers material covering the curved external side of the central web connecting the arms of the U-shaped section. In complement or instead of the unidirectional fibers material, it is also possible to use a woven structure of continuous fibers. It is also advantageous to form the continuous reinforcing fibers in a polymeric material, which could advantageously be of the same type as the material used for forming the frame elements.

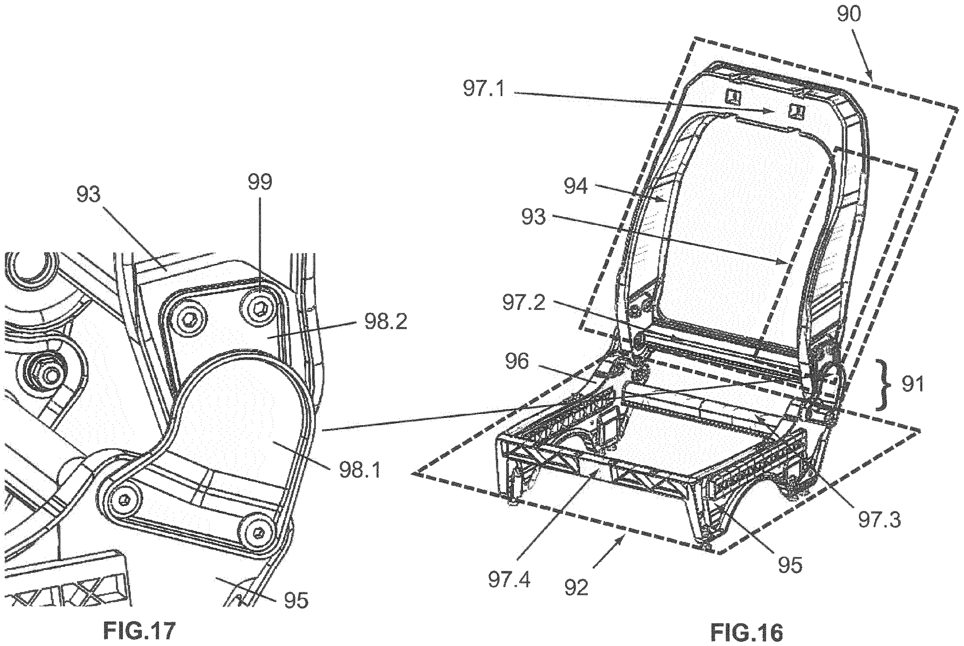

**Figure 16** shows a further embodiment of the seat with a reclinable seat back. Accordingly, a back frame structure 90 is pivotally connected via a hinge mechanism 91 to a seat chassis structure 92. Each of the back frame structure 90 and the seat chassis structure 92 has two lateral longitudinal frame elements 93, 94 and 95, 96, respectively, which are connected by two connecting elements 97.1, 97.2 and 97.3, 97.4, respectively. In this configuration, said lateral longitudinal frame elements 93, 94 and 95, 96 and said transverse connecting elements 97.1, 97.2, 97.3 and 97.4 are manufactured by injection moulding of polymer materials. The hinge mechanism 91 mainly consists of stamped steel sheet parts.

**Figure 17** shows in greater detail the hinge mechanism of Figure 16. This hinge mechanism 91 is formed by two rotatably connected steel plates 98.1 and 98.2, each plates being fixedly connected respectively to the bottom end of the frame element 93 and the rear end of the frame element 95 by means of two bolt fixations 99. Furthermore, in a preferred embodiment, the hinge mechanism 91 is also fixedly connected at a supplementary point to the bottom end of the frame element 93, said point being aligned with the pivot point of the two plates 98.1 and 98.2. This configuration reduces the risk of buckling of the hinge mechanism when the seat back is loaded. Buckling and large deformation of the hinge mechanism or its brackets may lead to catastrophic failure of the whole assembly as polymers are in general more brittle.

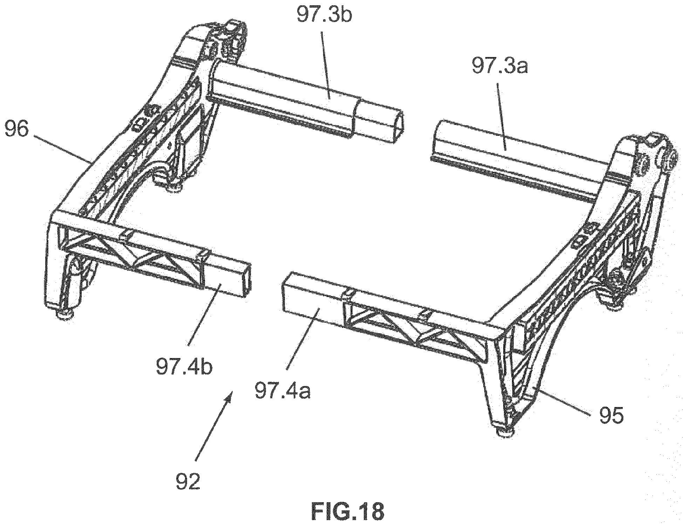

**Figure 18** shows a view of the seat chassis structure 92 in its splitted position. Indeed, in the configuration shown, the left and right lateral frame elements 96 and 95 are connected together via two telescopic connecting elements 97.3 and 97.4. Thus, each connecting element 97.3 and 97.4 comprises a left part 97.3b and 97.4b connected to the left lateral frame element 96 and a right part 97.3a and 97.4a connected to the right lateral frame element 95, said left and right parts being configured so as to fit into each other. This configuration facilitates the tooling and the assembling of the seat chassis structure 92.

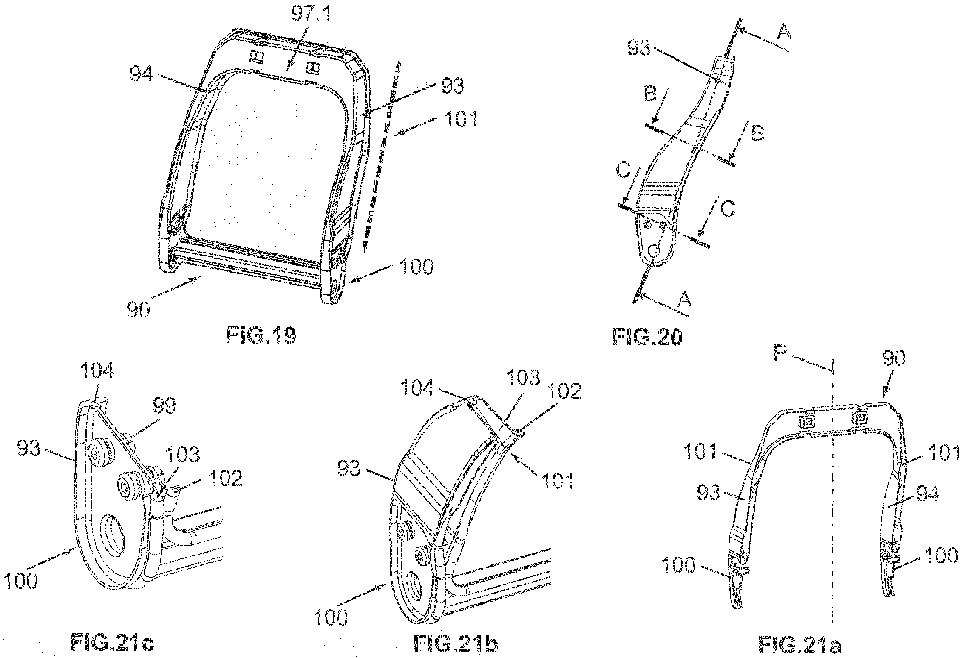

**Figure 19** shows a view of the back frame structure 90. Each lateral frame elements 93 and 94 of said back frame structure 90 comprises a lower portion 100 having an I-shaped cross-section and an upper portion 101 having a U-shaped cross-section. The upper portion 101 forms the main part of the longitudinal extension of the lateral frame elements 93 and 94 and reaches to the upper transversal connecting element 97.1. The lower portion 100 corresponds approximately to the portion where a hinge mechanism 91 is mounted. This configuration of the back frame structure 90 combining both U and I-shaped section is more clearly shown in Figures 21a, 21b and 21c.

**Figures 21a, 21b and 21c** show sectional, perspective views of the back frame structure 90 of Figure 20 respectively along the direction A-A, B-B and C-C.

In Figure 21a, one can see that the back frame structure 90 is symmetrical relative to a vertical plane P and that the lower portion 100 and the upper portion 101 of the longitudinal frame elements 93 and 94 have different cross-sections. The lower portion 100 has globally an I-shaped cross-section, wherein the I is oriented so that its flanges are approximately perpendicular to the vertical plane P. The upper portion 101 has globally a U-shaped cross-section, wherein the U is oriented so that its arms are approximately aligned with the vertical plane P. This upper portion 101 reaches to the upper transversal connecting element 97.1, which has globally a U-shaped cross-section, wherein the U is oriented so that its arms are approximately perpendicular to the vertical plane P. In this embodiment, the orientation of the U-shaped cross-sections is such that the arms of the U are oriented towards the rear of the vehicule.

In Figure 21b, it is shown a rear view of the bottom end of the longitudinal frame element 93. This view shows at the same time the said U-shaped cross-section of the upper portion 101 and the said I-shaped cross-section of the lower portion 100. Three reinforcements 102, 103 and 104 are integrated inside the said U-shaped cross-section. These reinforcements 102, 103 and 104 consist in a tow of continuous fibers and are positioned respectively at the end of the two arms of the U and in the middle of the central web joining these arms.

In Figure 21c, it is shown the lower portion 100 of the longitudinal frame element 93. This lower portion 100 corresponds approximately to an area intended to receive the upper hinge mechanism bracket. Therefore, the upper limit of the lower portion 100 is positioned just above the two bolts 99 joining the hinge mechanism to the longitudinal frame element 93. The said reinforcements 103 and 104 of the said U-shaped cross-section extend inside the said I-shaped cross-section, in a position corresponding approximately to the connection line between the flanges of the I and the central web joining these flanges.

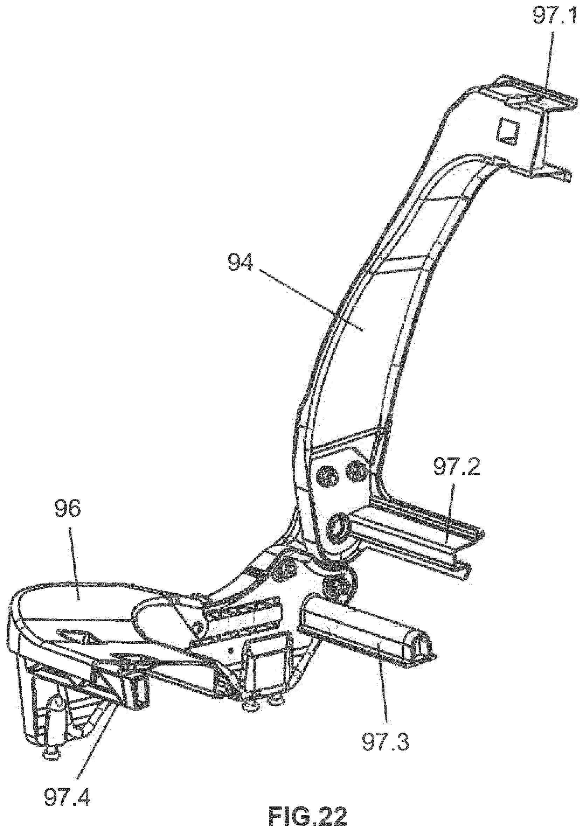

**Figure 22** shows a sectional, perspective view of the seat frame structure of Figure 16 along a plane parallel to the longitudinal direction of the vehicle. This view shows the shape of the section of the connecting elements 97.1, 97.2, 97.3 and 97.4. The connecting elements 97.1 and 97.2 have an open C-shaped section, the arms of the C being approximately aligned with the lateral direction of the vehicle. The connecting elements 97.3 and 97.4 have a closed section.

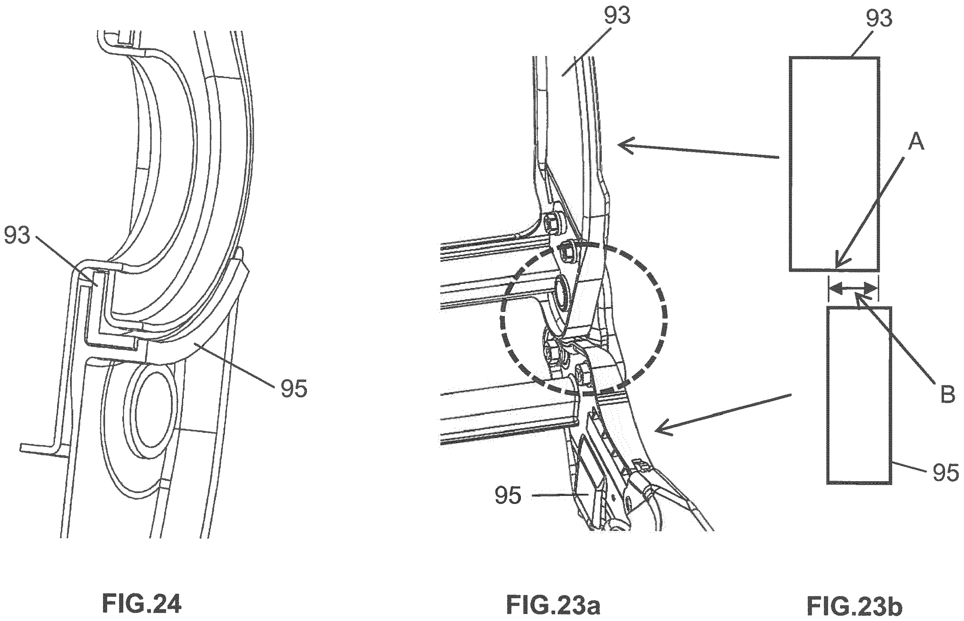

**Figure 23a** shows in greater detail the position of the bottom end of a lateral longitudinal frame element 93 of the back frame structure 90 of Figure 16 with regard to the rear end of the lateral longitudinal frame element 95 of the seat chassis frame structure 92. Said back frame structure 90 and said seat chassis structure 92 are positioned so that the lateral longitudinal frame element 95 is well aligned with the lateral longitudinal frame element 93. This configuration promotes an efficient stress flow in the structure of the seat. Furthermore, when vertical displacement of the back frame structure 90 occurs, due to a loading of the seat back, the risk that the hinge mechanism suffers an uncontrolled deformation is greatly reduced. Indeed, the contact between the bottom end of the side frame element 93 and the rear end of the side frame element 95 limits the displacement of the back frame structure 90, and, thus, the deformation of the hinge mechanism 91.

**Figure 23b** shows a schematic representation of Figure 23a. This view shows clearly that the vertical projection B of the width A of the lower end of the lateral longitudinal frame element 93 of the seat back frame structure 90 is covered at least partially by the adjacent rear end of the lateral longitudinal frame element 95 of the seat chassis structure 90. In a preferred embodiment of the invention, the length of the projection B corresponds to more than 75% of the length of the width A, and, preferably, is approximately equal to 100 % of the width A.

**Figure 24** shows a sectional, perspective view of the bottom end of the lateral longitudinal side frame element 93 of the back frame structure 90 of Figure 16 in a specific embodiment of the invention. This view shows that said bottom end and the rear end of the side frame element 95 of the seat chassis structure 92 fit into each other so that said rear end constitutes a lateral guide for said bottom end. This overlapping configuration limits potential critical lateral movement of the back frame structure 90 and promotes a stable structure also at high loads. It is obvious that, in a further embodiment of the invention, said bottom end and said rear end may be configured so that said bottom end constitutes a lateral guide for said rear end.

The present invention provides light back, seat chassis and entire seat frames, particularly suitable for vehicle seats, for example car seats. The seat frames are principally made of polymers, in particular injection moulded and/or compression moulded composites. The polymers are preferably fibre-reinforced. Preferably, they contain about 30-70% fibre by weight, more preferably 40-50% fibre by weight of the polymer including the fibre. Fibre may be glass fibre and/or carbon fibre, for example. Preferably, they are short fibres, having an average length of about 2-3 mm but could include continuous fibres locally where additional reinforcement is required.

Polymers and composites useful for the purpose of the present invention include standard engineering polymers commonly used for structural plastic parts such as Polypropylene, Polyamides and Polyethylene Terephthalate. These polymers may be reinforced by fiber.

Reinforcement elements may also be polymers, in particular fibre reinforced polymers. For example, reinforcement elements may already be provided with the injection or compression moulded composite. For example, a longitudinal frame element 4 or 5 may be obtained by injection moulding including reinforcement elements 32, 34 provided for harbouring the axle or the nuts or screws for attaching to a pivoting hinge 13. The reinforcement elements may also be applied in a separate step, following the preparation of the main structure, such as the longitudinal frame element with an I-shaped cross section. In this case, also composite reinforcements but also other reinforcement materials may be used, for example metal, fabrics, and wood. In Figure 2, reinforcement elements 40 are fabrics applied to the external surfaces of the distal and proximal flat elements 11 and 12, and reinforcement element 41 is a tow of fibre reinforced polymer. EP0825922B9 discloses a processes and equipments for manufacturing polymer and composite products such as is described in the present invention and indicates how local fibre reinforcements can be incorporated in polymer parts whilst minimising the additional associated cost.

## Claims

1. A vehicle seat frame structure comprising two separate pairs of lateral, left and right longitudinal frame elements (4, 5, 26, 27, 93, 94, 95, 96) joined by at least one transverse connecting element (6, 7, 8, 97.1, 97.2, 97.3, 97.4), said elements being made at least in part of a polymer material, wherein a first pair forms a back frame structure (20, 90) and a second pair forms a seat chassis structure (21, 92), and wherein said back frame structure (20, 90) and said seat chassis structure (21, 92) are pivotally connected with each other by a hinge mechanism (13, 91) so as to allow for adjustment of the angle between said back frame structure (20, 90) and said seat chassis structure (21, 92), **characterized in that** said lateral longitudinal frame elements (4, 5, 93, 94) of said back frame structure (20, 90) have a lower portion (80, 100) with an I-shaped cross-section and an upper portion (81, 101) with a U-shaped cross-section, said I-shaped cross-section being defined by a central web and two proximal and distal flanges connected by said central web, each of said two proximal and distal flanges being connected along a longitudinal axis of symmetry to an end portion of said central web and being substantially perpendicular to said central web, said central web being oriented such that its two opposing sides face towards the lateral directions, respectively the left and the right directions, of the vehicle seat frame structure, said U-shaped cross-section being defined by two lateral flanges connected by a bottom web, said lateral flanges being oriented according to a rear-to-front or front-to-rear direction of the vehicle seat frame structure, **in that** said lateral longitudinal frame elements (4, 5, 93, 94) of said back frame structure (20, 90) have a transitional portion (82) between said upper portion (81) and said lower portion (80), said transitional portion (82) having a combined U-shaped and I-shaped cross-section reminding of the capital letter Y and **in that** said back frame structure (90) and said seat chassis structure (92) are positioned so that the lateral longitudinal frame elements (95, 96) of the seat chassis structure (92) are aligned with the lateral longitudinal frame elements (93, 94) of the seat back frame structure (90), so that more than 75%, and preferably approximately 100 %, of the projection of the width of the bottom end of the lateral longitudinal frame elements (93, 94) of the seat back frame structure (90) is covered by the adjacent rear end of the lateral longitudinal frame elements (95, 96) of the seat chassis structure (92).

2. The vehicle seat frame structure according to claim 1, wherein said lateral longitudinal frame elements (26, 27, 95, 96) of said seat chassis structure (21) have a substantially I-shaped cross-section along at least a substantial part of their length.

3. The vehicle seat frame structure according to claim 1, wherein said lateral longitudinal frame elements of said seat chassis structure (21) have a substantially U-shaped cross-section along at least a substantial part of their length.

4. The vehicle seat frame structure according to the preceding claim, said lateral longitudinal frame elements of said seat chassis structure (21) have a first portion with a U-shaped cross-section and a second portion with an I-shaped cross-section.

5. The vehicle seat frame structure according to any one of the preceding claims, wherein said lateral longitudinal frame elements are disposed substantially parallel and symmetric towards a plane of symmetry aligned with the longitudinal axis of the vehicle and in that said U or I-shaped section comprises two flanges fore and aft (11, 12) oriented substantially perpendicular to said plane of symmetry.

6. The vehicle seat frame structure according to any one of the preceding claims, wherein said lateral longitudinal frame elements (4, 5, 26, 27, 93, 94, 95, 96) have local reinforcements of continuous fibers close to the upper and/or lower side of the U or I-shaped cross-section.

7. The seat frame structure according to any one of the preceding claims, said seat back frame structure (90) and said seat chassis structure (92) fit into each other so that the rear end of the lateral longitudinal frame elements (95, 96) of the seat chassis structure (92) constitutes a lateral guide for the bottom end of the lateral longitudinal frame elements (93, 94) of the seat back frame structure (90) or reciprocally.

8. The seat frame structure according to any one of the preceding claims, wherein said transverse connecting element (6, 7, 8, 97.3, 97.4) has a closed cross-section on at least part of its length.

9. The vehicle seat frame structure according to any one of the claims 1 to 7, wherein said transverse connecting element (97.1, 97.2) has an open C-section cross-section on at least part of its length.

10. The vehicle seat frame structure according to any one of the preceding claims wherein said lateral longitudinal frame elements (4, 5, 26, 27, 93, 94, 95, 96) and said transverse connecting element (6, 7, 8, 97.1, 97.2, 97.3, 97.4) are manufactured by injection moulding of polymer materials.

11. The seat frame structure according to any one of the preceding claims, comprising a central flat web (10) of the longitudinal frame element (4) reinforced by geometrical features (31-36) and/or a lower transversal connecting element (7, 7.1) which are situated to support the hinge mechanism (13) against premature collapse under impact load and/or to redistribute impact loads.

12. The seat frame structure according to any one of the preceding claims, wherein the seat frame structure is assembled from separate preferably telescopically connected components.

## Patentansprüche

1. Rahmenstruktur eines Fahrzeugsitzes, aufweisend zwei getrennte Paare von seitlichen, linken und rechten longitudinalen Rahmenelementen (4, 5, 26, 27, 93, 94, 95, 96), welche durch mindestens ein quer verlaufendes Verbindungselement (6, 7, 8, 97.1, 97.2, 97.3, 97.4) verbunden sind, wobei die Elemente zumindest zum Teil aus einem Polymermaterial hergestellt sind, wobei ein erstes Paar eine Rückenrahmenstruktur (20, 90) und ein zweites Paar eine Sitzgestellstruktur (21, 92) bilden, und wobei die Rückenrahmenstruktur (20, 90) und die Sitzgestellstruktur (21, 92) durch einen Gelenkmechanismus (13, 91) drehbar miteinander verbunden sind, um so eine Einstellung des Winkels zwischen der Rückenrahmenstruktur (20, 90) und der Sitzgestellstruktur (21, 92) zu ermöglichen, **dadurch gekennzeichnet, dass** die seitlichen longitudinalen Rahmenelemente (4, 5, 93, 94) der Rückenrahmenstruktur (20, 90) einen unteren Abschnitt (80, 100) mit einem I-förmigen Querschnitt und einen oberen Abschnitt (81, 101) mit einem U-förmigen Abschnitt aufweisen, wobei der I-förmige Querschnitt durch einen zentralen Steg und zwei mit dem zentralen Steg verbundene nahe gelegene und abgelegene Flansche definiert wird, wobei jeder der beiden nahe gelegenen und abgelegenen Flansche entlang einer longitudinalen Symmetrieachse mit einem Endabschnitt des zentralen Stegs verbunden ist und im Wesentlichen senkrecht zu dem zentralen Steg verläuft, wobei der zentrale Steg derartig ausgerichtet ist, dass seine zwei gegenüber liegenden Seiten seitlichen Richtungen, jeweils die Richtung nach rechts und nach links, der Rahmenstruktur eines Fahrzeugsitzes zugewandt sind, wobei der U-förmige Querschnitt von zwei seitlichen, durch einen unteren Steg verbundene Flansche definiert wird, wobei die seitlichen Flansche gemäß einer von vorne nach hinten verlaufenden Richtung oder von hinten nach vorne verlaufenden Richtung der Rahmenstruktur eines Fahrzeugsitzes ausgerichtet sind, dass die seitlichen longitudinalen Rahmenelemente (4, 5, 93, 94) der Rückenrahmenstruktur (20, 90) zwischen dem oberen Abschnitt (81) und dem unteren Abschnitt (80) einen Übergangsabschnitt (82) aufweisen, wobei der Übergangsabschnitt (82) einen kombinierten U-förmigen und I-förmigen Querschnitt aufweist, welcher an den Großbuchstaben Y erinnert, und dass die Rückenrahmenstruktur (90) und die Sitzgestellstruktur (92) so angeordnet sind, dass die seitlichen longitudinalen Rahmenelemente (95, 96) der Sitzgestellstruktur (92) mit den seitlichen longitudinalen Rahmenelementen (93, 94) der Rückenrahmenstruktur (90) ausgerichtet sind, so dass mehr als 75%, und vorzugsweise ungefähr 100%, der Projektion der Breite des unteren Endes der seitlichen longitudinalen Rahmenelemente (93, 94) der Rückenrahmenstruktur (90) von dem benachbarten hinteren Ende der seitlichen longitudinalen Rahmenelemente (95, 96) der Sitzgestellstruktur (92) überdeckt ist.

2. Rahmenstruktur eines Fahrzeugsitzes nach Anspruch 1, wobei die seitlichen longitudinalen Rahmenelemente (26, 27, 95, 96) der Sitzgestellstruktur (21) einen im Wesentlichen I-förmigen Querschnitt entlang zumindest eines wesentlichen Teils ihrer Länge aufweisen.

3. Rahmenstruktur eines Fahrzeugsitzes nach Anspruch 1, wobei die seitlichen longitudinalen Rahmenelemente der Sitzgestellstruktur (21) einen im Wesentlichen U-förmigen Querschnitt entlang zumindest eines wesentlichen Teils ihrer Länge aufweisen.

4. Rahmenstruktur eines Fahrzeugsitzes nach dem vorhergehenden Anspruch, wobei die seitlichen longitudinalen Rahmenelemente der Sitzgestellstruktur (21) einen ersten Abschnitt mit einem U-förmigen Querschnitt und einen zweiten Abschnitt mit einem I-förmigen Querschnitt aufweisen.

5. Rahmenstruktur eines Fahrzeugsitzes nach einem der vorhergehenden Ansprüche, wobei die seitlichen longitudinalen Rahmenelemente im Wesentlichen parallel und symmetrisch zu einer mit der longitudinalen Achse des Fahrzeugs ausgerichteten Symmetrieebene angeordnet sind, und dass der U- oder I-förmige Querschnitt jeweils einen vorderen und hinteren Flansch (11, 12) aufweist, welche im Wesentlichen senkrecht zu der Symmetrieebene ausgerichtet sind.

6. Rahmenstruktur eines Fahrzeugsitzes nach einem der vorhergehenden Ansprüche, wobei die seitlichen longitudinalen Rahmenelemente (4, 5, 26, 27, 93, 94, 95, 96) lokale Verstärkungen aus kontinuierlichen Fasern in der Nähe der unteren und/oder oberen Seite des U- oder I-förmigen Querschnitts aufweisen.

7. Rahmenstruktur eines Fahrzeugsitzes nach einem der vorhergehenden Ansprüche, wobei die Rückenrahmenstruktur (90) und die Sitzgestellstruktur (92) so ineinander passen, dass das hintere Ende der seitlichen longitudinalen Rahmenelemente (95, 96) der Sitzgestellstruktur (92) eine seitliche Führung für das untere Ende der seitlichen longitudinalen Rahmenelemente (93, 94) der Rückenrahmenstruktur (90) oder umgekehrt darstellt.

8. Rahmenstruktur eines Fahrzeugsitzes nach einem der vorhergehenden Ansprüche, wobei das quer verlaufende Verbindungselement (6, 7, 8, 97.3, 97.4) an mindestens einem Teil seiner Länge einen geschlossenen Querschnitt aufweist.

9. Rahmenstruktur eines Fahrzeugsitzes nach einem der Ansprüche 1 bis 7, wobei das quer verlaufende Verbindungselement (97.1, 97.2) an mindestens einem Teil seiner Länge einen offenen C-förmigen Querschnitt aufweist.

10. Rahmenstruktur eines Fahrzeugsitzes nach einem der vorhergehenden Ansprüche, wobei die seitlichen longitudinalen Rahmenelemente (4, 5, 26, 27, 93, 94, 95, 96) und das quer verlaufende Verbindungselement (6, 7, 8, 97.1, 97.2, 97.3, 97.4) durch Spritzgießen von Polymermaterialien hergestellt sind.

11. Sitzrahmenstruktur nach einem der vorhergehenden Ansprüche, aufweisend einen zentralen flachen Steg (10) des longitudinalen Rahmenelements (4), welcher durch geometrische Merkmale (31-36) und/oder ein unteres quer verlaufendes Verbindungselement (7, 7.1) verstärkt wird, welche angeordnet sind, um den Gelenkmechanismus (13) gegen vorzeitigen Einsturz unter einer Aufpralllast zu stützen und/oder Aufpralllasten weiterzuleiten.

12. Sitzrahmenstruktur nach einem der vorhergehenden Ansprüche, wobei die Sitzrahmenstruktur aus separaten, vorzugsweise teleskopisch verbundenen, Bauteilen zusammengesetzt ist.

## Revendications

1. Structure d'armature de siège de véhicule comprenant deux paires distinctes d'éléments d'armature latéraux, gauche et droit, longitudinaux (4, 5, 26, 27, 93, 94, 95, 96) reliés par au moins un élément de raccordement transversal (6, 7, 8, 97.1, 97.2, 97.3, 97.4), lesdits éléments étant constitués au moins en partie d'un matériau polymère, une première paire formant une structure d'armature de dossier (20, 90) et une seconde paire formant une structure de châssis d'assise (21, 92), et ladite structure d'armature de dossier (20, 90) et ladite structure de châssis d'assise (21, 92) étant raccordées de manière pivotante l'une à l'autre par un mécanisme de charnière (13, 91) de façon à permettre le réglage de l'angle entre ladite structure d'armature de dossier (20, 90) et ladite structure de châssis d'assise (21, 92), **caractérisée en ce que** lesdits éléments d'armature latéraux longitudinaux (4, 5, 93, 94) de ladite structure d'armature de dossier (20, 90) comportent une partie inférieure (80, 100) avec une section transversale en forme de I et une partie supérieure (81, 101) avec une section transversale en forme de U, ladite section transversale en forme de I étant définie par une âme centrale et deux ailes proximale et distale raccordées par ladite âme centrale, chacune desdites deux ailes proximale et distale étant raccordée le long d'un axe de symétrie longitudinal à une partie d'extrémité de ladite âme centrale et étant essentiellement perpendiculaire à ladite âme centrale, ladite âme centrale étant orientée de telle sorte que ses deux côtés opposés soient tournés vers les directions latérales, respectivement les directions gauche et droite, de la structure d'armature de siège de véhicule, ladite section transversale en forme de U étant définie par deux ailes latérales raccordées par une âme inférieure, lesdites ailes latérales étant orientées suivant une direction arrière vers l'avant ou avant vers l'arrière de la structure d'armature de siège de véhicule, **en ce que** lesdits éléments d'armature latéraux longitudinaux (4, 5, 93, 94) de ladite structure d'armature de dossier (20, 90) comportent une partie de transition (82) entre ladite partie supérieure (81) et ladite partie inférieure (80), ladite partie de transition (82) présentant une section transversale combinant une forme de U et une forme de I rappelant la lettre majuscule Y et **en ce que** ladite structure d'armature de dossier (90) et ladite structure de châssis d'assise (92) sont positionnées de telle sorte que les éléments d'armature latéraux longitudinaux (95, 96) de la structure de châssis d'assise (92) soient alignés sur les éléments d'armature latéraux longitudinaux (93, 94) de la structure d'armature de dossier de siège (90), de sorte que plus de 75 %, et de préférence approximativement 100 %, de la projection de la largeur de l'extrémité inférieure des éléments d'armature latéraux longitudinaux (93, 94) de la structure d'armature de dossier de siège (90) soient couverts par l'extrémité arrière adjacente des éléments d'armature latéraux longitudinaux (95, 96) de la structure de châssis d'assise (92).

2. Structure d'armature de siège de véhicule selon la revendication 1, dans laquelle lesdits éléments d'armature latéraux longitudinaux (26, 27, 95, 96) de ladite structure de châssis d'assise (21) présentent une section transversale essentiellement en forme de I le long d'au moins une grande partie de leur longueur.

3. Structure d'armature de siège de véhicule selon la revendication 1, dans laquelle lesdits éléments d'armature latéraux longitudinaux de ladite structure de châssis d'assise (21) présentent une section transversale essentiellement en forme de U le long d'au moins une grande partie de leur longueur.

4. Structure d'armature de siège de véhicule selon la revendication précédente, lesdits éléments d'armature latéraux longitudinaux de ladite structure de châssis d'assise (21) présentent une première partie avec une section transversale en forme de U et une seconde partie avec une section transversale en forme de I.

5. Structure d'armature de siège de véhicule selon l'une quelconque des revendications précédentes, dans laquelle lesdits éléments d'armature latéraux longitudinaux sont disposés de manière essentiellement parallèle et symétrique vis-à-vis d'un plan de symétrie aligné sur l'axe longitudinal du véhicule et en ce que ladite section en forme de U ou de I comprend deux ailes avant et arrière (11, 12) orientées de manière essentiellement perpendiculaire audit plan de symétrie.

6. Structure d'armature de siège de véhicule selon l'une quelconque des revendications précédentes, dans laquelle lesdits éléments d'armature latéraux longitudinaux (4, 5, 26, 27, 93, 94, 95, 96) comportent des renforcements locaux composés de fibres continues à proximité du côté supérieur et/ou du côté inférieur de la section transversale en forme de U ou de I.

7. Structure d'armature de siège selon l'une quelconque des revendications précédentes, dans laquelle ladite structure d'armature de dossier de siège (90) et ladite structure de châssis d'assise (92) s'adaptent l'une dans l'autre de telle sorte que l'extrémité arrière des éléments d'armature latéraux longitudinaux (95, 96) de la structure de châssis d'assise (92) constitue un guide latéral pour l'extrémité inférieure des éléments d'armature latéraux longitudinaux (93, 94) de la structure d'armature de dossier de siège (90) ou réciproquement.

8. Structure d'armature de siège selon l'une quelconque des revendications précédentes, dans laquelle ledit élément de raccordement transversal (6, 7, 8, 97.3, 97.4) présente une section transversale fermée sur au moins une partie de sa longueur.

9. Structure d'armature de siège de véhicule selon l'une quelconque des revendications 1 à 7, dans laquelle ledit élément de raccordement transversal (97.1, 97.2) présente une section transversale ouverte en C sur au moins une partie de sa longueur.

10. Structure d'armature de siège de véhicule selon l'une quelconque des revendications précédentes, dans laquelle lesdits éléments d'armature latéraux longitudinaux (4, 5, 26, 27, 93, 94, 95, 96) et ledit élément de raccordement transversal (6, 7, 8, 97.1, 97.2, 97.3, 97.4) sont fabriqués par moulage par injection de matériaux polymères.

11. Structure d'armature de siège selon l'une quelconque des revendications précédentes, comprenant une âme centrale (10) plane de l'élément d'armature longitudinal (4) renforcée par des éléments géométriques (31 à 36) et/ou un élément de raccordement transversal inférieur (7, 7.1) qui sont situés de manière à supporter le mécanisme de charnière (13) contre un effondrement prématuré sous une charge d'impact et/ou à redistribuer les charges d'impact.

12. Structure d'armature de siège selon l'une quelconque des revendications précédentes, la structure d'armature de siège étant assemblée à partir de composants distincts, de préférence raccordés de manière télescopique.
